Europäisches Patentamt

European Patent Office

Office européen des brevets

(11) Veröffentlichungsnummer: **0 074 423 B1**

(12) **EUROPÄISCHE PATENTSCHRIFT**

(45) Veröffentlichungstag der Patentschrift:
26.02.86

(51) Int. Cl.⁴: **F 16 K 3/00, B 62 D 5/06**

(21) Anmeldenummer: 81107228.9

(22) Anmeldetag: 14.09.81

(54) Hydraulische Steuervorrichtung.

(43) Veröffentlichungstag der Anmeldung:
23.03.83 Patentblatt 83/12

(45) Bekanntmachung des Hinweises auf die Patenterteilung:
26.02.86 Patentblatt 86/9

(84) Benannte Vertragsstaaten:
AT BE CH DE FR GB IT LI NL SE

(56) Entgegenhaltungen:
DE - A - 1 630 953
DE - B - 1 297 992
DE - B - 1 650 575
DE - B - 2 133 201
DE - B - 2 946 274
FR - A - 1 465 422

G. BAUER "Ölhydraulik" 2- Auflage, Abschnit 7.1
"Druckventile" 1978, B.G. TEUBNER, Stuttgart, Seiten
149 bis 151

(73) Patentinhaber: DEERE & COMPANY, 1 John Deere
Road, Moline Illinois 61265 (US)

(72) Erfinder: Becker, Manfred, Schwingstrasse 36,
D-6800 Mannheim (DE)
Erfinder: Ortlepp, Hilmar, Danziger Baumgang 28,
D-6800 Mannheim 31 (DE)

(74) Vertreter: Feldmann, Bernhard et al, DEERE &
COMPANY European Office, Patent Department
Steubenstrasse 36-42 Postfach 503,
D-6800 Mannheim 1 (DE)

## Beschreibung

Die Erfindung betrifft eine Steuerventilvorrichtung, insbesondere Lenkventil, mit einem Ventilschieber, einer diesen aufnehmenden Kammer, in die ein Verbraucher, eine Konstantdruckquelle und eine Steuerpumpe münden, und mit endseitig an die Kammer anschließenden Steuerdruckräumen, wobei die Steuerpumpe einerseits mit einem Steuerdruckraum und andererseits mit einem anderen Steuerdruckraum verbunden ist und · der Ventilschieber durch Betätigen der Steuerpumpe in Stellungen bringbar ist, in denen die Steuerpumpe und die Steuerdruckräume mit der Konstantdruckquelle verbunden sind und in denen ein Druckmittelstrom von der Konstantdruckquelle über die Steuerpumpe zu dem Verbraucher erfolgt.

Diese bekannte Steuerventilvorrichtung (DE—B—1 650 575) besteht aus einem Gehäuse mit einer Kammer, in die zwei Auslässe zu einem Lenkzylinder als Verbraucher, zwei Auslässe, die mit einer Steuerpumpe in Verbindung stehen, zwei Auslässe, die in einen Tank münden, und ein Einlaß, der mit einer Konstantdruckquelle verbunden ist, führen. In der Kammer ist ein mit Stegen und Ringnuten versehener Ventilschieber beweglich geführt, der zudem in seinem Inneren mit zwei voneinander unabhängigen Längsbohrungen versehen ist. Jede Längsbohrung steht mit jeweils einer Ringnut in Verbindung, die seitlich eines mittleren Steges angeordnet sind und die bei Verschieben des Ventilschiebers mit der Konstantdruckquelle verbindbar sind. Beide Ringnuten stehen aber ständig in Verbindung mit den Auslässen für die Steuerpumpe. In dem Einlaß für die Konstantdruckquelle ist ein Ventil vorgesehen, das ein Einströmen von Druckflüssigkeit in die Kammer unterbindet, solange sich der Ventilschieber in einer Neutralstellung befindet. Dieses Ventil ist druckbeaufschlagt, solange der Ventilschieber in seiner Neutralstellung verbleibt, und drückt über eine Kugel auf den mittleren Steg des Ventilschiebers, um diesen in seiner Neutralstellung zu halten. An jedem Ende der Kammer ist jeweils ein Steuerdruckraum vorgesehen, der über die Längsbohrungen mit jeweils einer Seite der Steuerpumpe verbunden ist. Nimmt der Ventilschieber seine Neutralstellung ein, dann sind die Auslässe zu dem Verbraucher und zu dem Tank und der Einlaß zu der Konstantdruckquelle geschlossen, lediglich die Steuerpumpe ist mit den Steuerdruckräumen verbinden. Um eine Bewegung des Lenkzylinders zu erreichen, wird die Steuerpumpe nach einer Seite betätigt, wodurch sich ein Druck in einem der Steuerdruckräume aufbaut, der dazu führt, daß sich der Ventilschieber nach einer Seite verschiebt. Durch diese Schiebebewegung wird das Ventil geöffnet, und von der Konstantdruckquelle unter Druck gesetzte Flüssigkeit wird über eine der Ringnuten zu der Steuerpumpe und über diese zu dem Lenkzylinder gefördert. Auf der anderen Seite aus dem Lenkzylinder austretende Flüssigkeit wird über verschiedene Ringnuten dem Tank ungedrosselt zugeführt.

. Dieser Steuerventilvorrichtung haftet der Nachteil an, daß das Druckmittel, das ständig von der Konstantdruckquelle unter Systemdruck gehalten wird, erst dann der Steuerpumpe zugeführt wird, wenn der Ventilschieber bereits um ein bestimmtes Maß aus seiner Neutralstellung heraus bewegt worden ist. Danach baut sich erst der Systemdruck in der Steuerpumpe auf, an der dann durch den plötzlichen Druckanstieg bedingt ein Ruck festzustellen ist. Mit diesem von dem Fahrer wahrnehmbaren Druckstoß geht eine auf die Dauer gesehen schädliche Wechselbelastung des Inneren der Steuerpumpe einher. Dieser Druckstoß erfolgt auch auf den Lenkzylinder, da der Ventilschieber vor dem Öffnen des Einlasses der Konstantdruckquelle bereits so weit verschoben worden ist, daß die Auslässe zu dem Lenkzylinder schon offen sind. Solange aber der Einlaß noch geschlossen ist, herrscht in dem Lenkzylinder und an der Steuerpumpe kein Systemdruck.

Die der Erfindung zugrunde liegende Aufgabe wird darin gesehen, die Steuerventilvorrichtung derart zu verbessern, daß zum Erreichen einer Feinsteuerung derartige Druckstöße auf die Steuerpumpe vermieden werden.

Diese Aufgabe ist erfindungsgemäß dadurch gelöst worden, daß die Steuerpumpe und die Steuerdruckräume ständig mit der Konstantdruckquelle verbunden sind und entgegen der Strömungsrichtung von der Konstantdruckquelle zu den Steuerdruckräumen schließende Rückschlagventile in der Verbindung zwischen der Konstantdruckquelle und den Steuerdruckräumen vorgesehen sind.

Auf diese Weise steht die Druckflüssigkeit ständig unter dem höchstmöglichen Druck an der Steuerpumpe an, und ein plötzlicher Druckanstieg beim Verschieben des Ventilschiebers, wenn dieser eine direkte Verbindung der Konstantdruckquelle mit der Steuerpumpe herstellt, findet nicht statt. Es ist unerheblich, unter welchem Systemdruck die Steuerpumpe und die Steuerventilvorrichtung stehen, solange selbstverständlich übliche Drücke eingehalten werden. Ein Druckminderventil, das einen hohen Systemdruck auf einen speziellen Lenkdruck herabsetzt, ist nicht erforderlich, da Druckstöße egal bei welchem Druckniveau nicht stattfinden. Ferner wird der Ventilschieber durch das ständige Herrschen des Höchstdruckes in den Steuerdruckräumen automatisch in seiner Neutralstellung in der Art einer Druckwaage gehalten.

Eine einfache Verbindung der Konstantdruckquelle wird bei einer Steuerventilvorrichtung, bei der in dem Ventilschieber Längsbohrungen vorgesehen sind, die einenends in jeweils einen Steuerdruckraum führen, dadurch erreicht, daß die zu beiden Steuerdruckräumen führenden Längsbohrungen miteinander verbunden sind und über eine Querbohrung ständig mit der Konstantdruckquelle in Verbindung stehen. Dieses erfinderische Merkmal ist insoweit vorteilhaft, als in einen Ventilschieber, der ohnehin drehend auf einem Drehautomaten gefertigt wird, sehr leicht eine Längs- und eine Querbohrung eingearbeitet werden kann. Zusätzliche Leitungen oder Kanäle in dem Gehäuse sind dadurch nicht erforderlich.

Ein weiteres vorteilhaftes und erfinderisches Merkmal wird darin gesehen, daß die Rückschlagventile in den oder an den in die Steuerdruckräume eintretenden Endbereichen der Längsbohrungen vorgesehen sind, da dadurch der Ventilschieber mit den Rückschlagventilen vorgefertigt werden kann und als ein kompaktes Element, über welches die Druckmittelzuführung zu den Steuerdruckräumen und der Steuerpumpe stattfinden kann, einfach in die Kammer einzusetzen ist.

Wenn nach einem weiteren erfinderischen Vorschlag bei einer Steuerventilvorrichtung, bei der in die Kammer ein Tank mündet und der Ventilschieber einen Steg aufweist, der die Mündungen des Verbrauchers und des Tanks in der Kammer trennt, wenn der Ventilschieber eine Neutralstellung einnimmt, vorgesehen ist, daß auf dem Steg Feinsteuernuten angeordnet sind, über die durch Verschieben des Steuerschiebers eine Verbindung zwischen dem Verbraucher und dem Tank herstellbar ist, dann ist gewährleistet, daß bei geringen Lenkanschlägen und somit geringem Lenkwiderstand eine Drosselung der aus dem Lenkzylinder abfließenden Flüssigkeit an den Feinsteuernuten stattfindet, die dafür sorgt, daß sich ein Rückströmdruck aufbaut, der eine zu schnelle und unkontrollierte Lenkbewegung verhindert.

Eine Steuerventilvorrichtung, bei der in dem Mündungsbereich des Tanks in die Kammer eine Ringkammer angeordnet ist, baut einen momentanen und übermäßig hohen Druckanstieg in dem Lenkzylinder auf erfinderische Weise dadurch ab, daß eine Druckentlastungsrille in den Steg eingebracht ist, die einerseits mit der Ringkammer in Verbindung steht und sich andererseits bis nahe an die Feinsteuernuten erstreckt. Derartige Druckanstiege könnten eventuell dadurch entstehen, daß der Lenkzylinder einer übermäßigen Sonnenbestrahlung ausgesetzt ist oder das Fahrzeug mit den lenkbaren Rädern gegen eine Bordsteinkante fährt.

Durch die Druckentlastungsrillen und die Feinsteuernuten wird der Kriechweg der Flüssigkeit über den Steg enorm verkürzt, so daß Flüssigkeit relativ einfach abströmen kann, was insbesondere dadurch vereinfacht wird, daß die Feinsteuernuten im Querschnitt und im Längsschnitt dreiecksförmig sind.

Eine Steuerventilvorrichtung, bei der sich zwischen der Konstantdruckquelle und der Kammer ein Kanal erstreckt, erlaubt auch dann eine Lenkfunktion, wenn die Konstantdruckquelle keine Druckflüssigkeit mehr liefert, wenn auf erfinderische Weise dafür gesorgt ist, daß der Kanal mit dem Tank in Verbindung steht und in der Verbindung ein in Richtung auf den Tank zu schließendes weiteres Rückschlagventil vorgesehen ist.

Die Steuerpumpe kann dann nämlich aus dem Tank Flüssigkeit ansaugen, diese in einen der Steuerdruckräume zum Verschieben des Ventilschiebers und zu dem Lenkzylinder zum Hervorrufen einer Lenkbewegung drängen.

Ein weiterer Vorteil wird bei einer Steuerventilvorrichtung, bei der in den Steuerdruckräumen sich auf dem Ventilschieber abstützende Neutralstellungsfedern vorgesehen sind, erfindungsgemäß dadurch erzielt, daß die Kennlinie der Neutralstellungsfedern progressiv ist. Bei der Verwendung von Neutralstellungsfedern mit einer progressiven Federkennlinie ist das Drehmoment an Lenkrad direkt abhängig von der Verstellung des Schiebers, also auch dem Maß des Lenkanschlages, wodurch eine kontrolliertere Lenkung möglich ist.

Die Erfindung wird nun anhand der beiliegenden Zeichnung näher erläutert.

Es zeigen:

Figur 1 eine perspektivische Ansicht einer hydraulischen Steuerventilvorrichtung,

Figur 2 eine hydraulische Steuerventilvorrichtung in einem Schaltbild, wobei die Steuerventilvorrichtung im Schnitt dargestellt ist,

Figur 3 einen Schnitt durch die Steuerventilvorrichtung gemäß Figur 2 längs der Linie A—A,

Figur 4 eine Ansicht eines Ventilschiebers,

Figur 5 bzw. Figur 6 einen kreisförmigen Ausschnitt gemäß Figur 4 im Querschnitt bzw. im Längsschnitt.

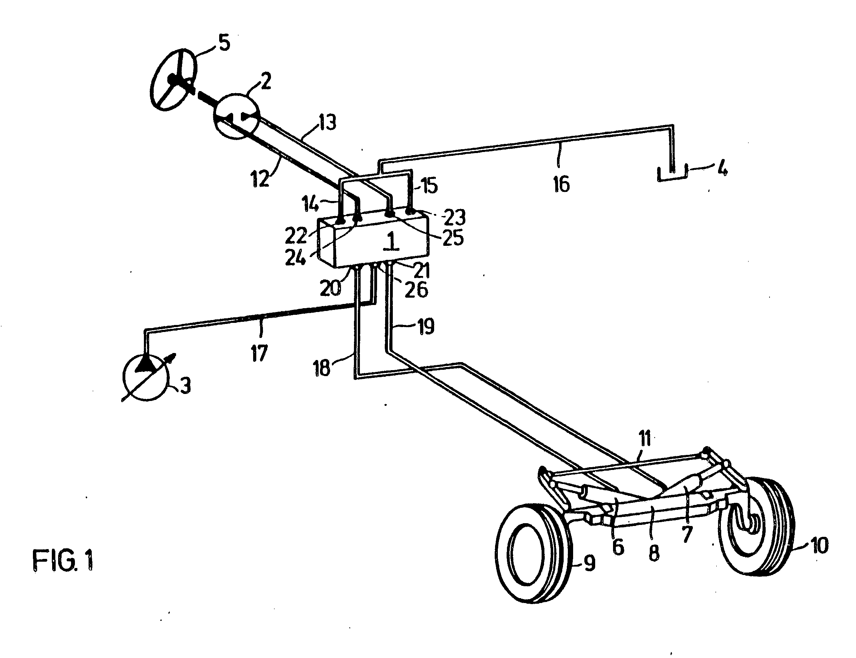

Gemäß Figur 1 ist die Steuerventilvorrichtung 1 an Anschlüssen 24 und 25 über Leitungen 12 und 13 mit einer Steuerpumpe 2 und einem Lenkrad 5 verbunden. Ferner führen Leitungen 18 und 19 von Arbeitsanschlüssen bzw. Mündungen 20 und 21 zu Verbrauchern in der Form von Lenkzylindern 7 und 6, die über ein Gestänge 11 und eine Achse 8 Räder 9 und 10 schwenken. Eine als Konstantdruckquelle ausgebildete Hauptpumpe 3 ist über eine Leitung 17 und einen Anschluß 26 und ein Tank 4 über Leitungen 14, 15 und 16 und Mündungen oder Anschlüsse 22 und 23 mit der Steuerventilvorrichtung 1 verbunden.

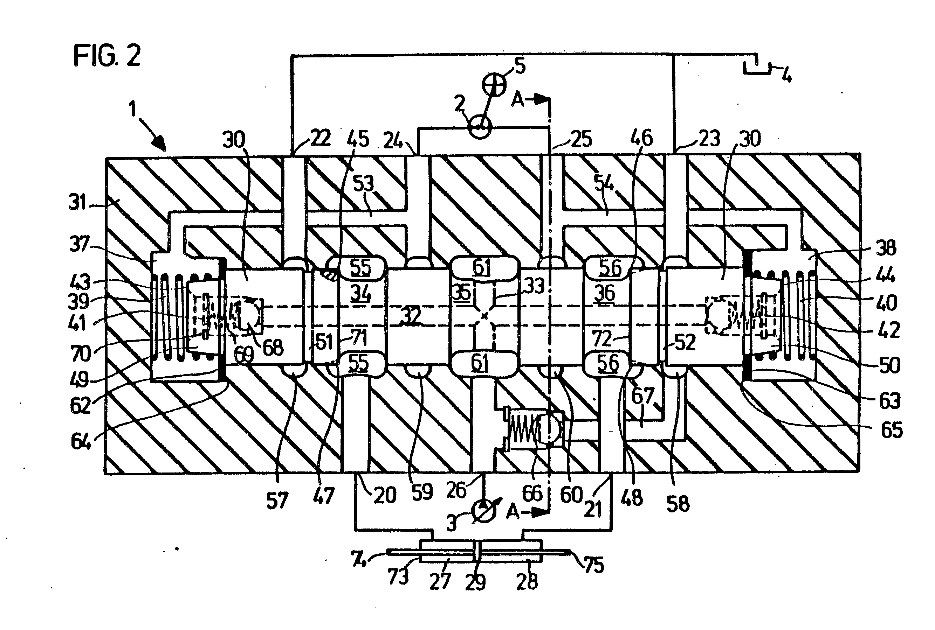

Wenn ein Fahrer des Lenkrad 5 nach links dreht, wird Öl von der Steuerpumpe 2 über die Leitung 12 und den Anschluß 24 in die Steuerventilvorrichtung 1 geliefert. Diese Steuerventilvorrichtung 1 wird anhand Figur 2 näher beschrieben. Infolge des Druckaufbaues in der Steuerventilvorrichtung 1 wird Öl über den Arbeitsanschluß 20 und die Leitung 18 in den Lenkzylinder 7 gedrückt, der über das Gestänge 11 und die Achse 8 die Räder 9 und 10 nach rechts schwenkt. Das Öl wird aus dem Lenkzylinder 6 gedrückt und fließt durch die Leitung 19, den Arbeitsanschluß 21, die Steuerventilvorrichtung 1 und den Anschluß 23 über die Leitungen 15 und 16 zu dem Tank 4 zurück. Die Hauptpumpe 3 fördert unterdessen über die Leitung 17, den Anschluß 26 und den Anschluß 25 Öl zu der Steuerpumpe 2. Die Lenkung nach links erfolgt sinngemäß in der gleichen Weise über den Anschluß 25 und den Arbeitsanschluß 21 und den Lenkzylinder 6. Das Rücklauföl gelangt entsprechend über den Lenkzylinder 7, den Arbeitsanschluß 20 und den Anschluß 22 durch die Leitungen 18, 14 und 16 zum Tank 4.

Die in Figur 1 dargestellte Steuerventilvorrichtung 1 ist in Figur 2 im Schnitt und in einem dazu passenden Schaltbild gezeigt.

Die Steuerventilvorrichtung 1 ist über den Arbeitsanschluß 20 bzw. 21 mit einem Druckraum 27 bzw. 28 eines Zylinders 73 verbunden. Ein Kolben 29 des Zylinders 73 hat zwei gleichgroße Wirkflächen. Ferner ist die Steuerventilvorrichtung 1 über die beiden schlüsse 22 und 23 mit dem Tank 4 verbunden. Die Steuerventilvorrichtung 1 weist ein Gehäuse 31 und einen Ventilschieber 30 auf, der Ringnuten 34, 35 und 36 besitzt. Der Ventilschieber 30 Durch ist Neutralstellungsfedern 39 und 40 stirnseitig belastet und weist zwei Steuerdruckräume 37 und 38 auf. Der Steuerdruckraum 37 bzw. 38 ist mit dem Anschluß 24 bzw. 25 der durch das Lenkrad 5 verstellbaren Steuerpumpe 2 und über zwei Rückschlagventile 41 und 42 mit dem Anschluß 26 der Hauptpumpe 3 verbunden.

Der Anschluß 26 der Hauptpumpe 3 ist in der dergestellten Neutralstellung des Ventilschiebers 30 geschlossen und in den Steuerdruckräumen 37 und 38 herrscht Systemdruck. Der Ventilschieber 30 weist eine Querbohrung 33 auf, die sich mit einer Längsbohrung 32 kreuzt. Die Querbohrung 33 mündet in die mittlere Ringnut 35. Das Rückschlagventil 41 bzw. 42 ist an jeweils einer Stirnseite 43 bzw. 44 des Ventilschiebers 30 eingelassen und schließt bei stirnseitiger Druckbelastung des Ventilschiebers 30. An den Ringnuten 34 und 36 des Ventilschiebers 30 sind Feinsteuernuten 45 bis 48 angeordnet. Die Feinsteuernuten 45 und 47 bzw. 46 und 48 sind an äußersten Kanten 71 bzw. 72 der äußersten Ringnut 34 bzw. 36 eingelassen. Der Ventilschieber 30 weist ferner stirnseitig jeweils den kegelstumpfförmigen Ansatz 49 bzw. 50 auf. Ferner sind an dem Ventilschieber 30 Druckentlastungsrillen 51 und 52 angebracht, die in der dargestellten Neutralstellung des Ventilschiebers 30 mit den Anschlüssen 22 bzw. 23 verbunden sind. Die Druckentlastungsrillen 51 und 52 sind ringförmig ausgestaltet. Der Anschluß 24 bzw. 25 der Steuerpumpe 2 ist über im Gehäuse 31 angebrachte Sackbohrungen 53 bzw. 54 mit dem Steuerdruckraum 37 bzw. 38 verbunden. Der Arbeitsanschluß 20 bzw. 21 mündet in im Gehäuse 31 angebrachte Ringnuten 55 bzw. 56, der Anschluß 22 bzw. 23 in Ringkammern oder Ringnuten 57 bzw. 58, der Anschluß 24 bzw. 25 der Steuerpumpe 2 in Ringnuten 59 bzw. 60 und der Anschluß 26 der Hauptpumpe 3 in eine Ringnut 61.

Die Neutralstellungsfedern 39 und 40 stützen sich auf Scheiben 62 und 63 ab. Die Scheibe 62 bzw. 63 stützt sich an Abstützkanten 64 bzw. 65 ab, die im Gehäuse 31 angeformt sind.

Der Anschluß 26 ist über ein Rückschlagventil 66 und eine Bohrung 67 mit dem Anschluß 23 verbunden. In dem dargestellten Ausführungsbeispiel sind zwei Anschlüsse dargestellt. Es ist jedoch auch möglich, daß die Steuerventilvorrichtung 1 nur über einen Anschluß mit dem Tank 4 verbunden ist.

Das Rückschlagventil 41 besteht aus einer Kugel 68, einer Feder 69 und einer Sicherung 70. Das Rückschlagventil 41 schließt bei stirnseitiger Druckbelastung des Ventilschiebers 30, während es sich bei einem Druck in der Längsbohrung 32 öffnet. Analog ist das Rückschlagventil 42 auf der anderen Seite des Ventilschiebers 30 angeordnet. Dieses Rückschlagventil 42 und das Rückschlagventil 66 besteht ebenso aus einer Kugel, einer Feder und einer Sicherung.

In Figur 2 ist die Steuerventilvorrichtung 1 in Neutralstellung des Ventilschiebers 30 dargestellt. Über den Anschluß 26 stehen die als Kanäle ausgebildete Längsbohrung 32 und die Querböhrung 33, die Steuerdruckräume 37 und 38 und über die Sackbohrungen 53 und 54 die Anschlüsse 24 und 25 unter Systemdruck. Die Druckräume 27 und 28 des Zylinders 73 sind durch die gesperrten Arbeitsanschlüsse 20 und 21 blockiert. Die Anschlüsse 22 und 23 sind mit dem Tank 4 verbunden.

Durch Betätigung des Lenkrads 5 in Drehrichtung rechts wird über die Steuerpumpe 2 in dem Steuerdruckraum 38 ein gegenüber dem Steuerdruckraum 37 höherer Druck aufgebaut. Hierdurch bewegt sich der Ventilschieber 30 nach links. Das Drucköl gelangt nun von der Hauptpumpe 3 über den Anschluß 26, die Ringnut 61 im Gehäuse 31, die Ringnut 35 und die Querbohrung 33 im Ventilschieber 30 einerseits zu der Ringnut 59 und über den Anschluß 24 zu der Steuerpumpe 2 und andererseits fließt das Drucköl von der Querbohrung 33 in die Längsbohrung 32, durch das sich öffnende Rückschlagventil 41, den Steuerdruckraum 37, über die Sackbohrung 53 ebenfalls über den Anschluß 24 zu der Steuerpumpe 2. Durch die steuerpumpe 2 fließt das Drucköl zu dem Anschluß 25 und über die Ringnut 60 im Gehäuse 31 in die Ringnut 36 des Ventilschiebers 30 zu der Ringnut 56 und über den Arbeitsanschluß 21 in den Druckraum 28 des Zylinders 73. Infolge dieses Druckaufbaues bewegt sich der Kolben 29 nach links und das Rücklauföl aus dem Druckraum 27 gelangt über den Arbeitsanschluß 20, die Ringnut 55, die Ringnut 34 des Ventilschiebers 30 in die Ringnut 57 und über den Anschluß 22 zu dem Tank 4. Der Druckabbau findet an den Feinsteuernuten 45 und 47 an der äußersten Kante 71 der äußersten Ringnut 34 statt. Bei geringer Belastung des Ventilschiebers 30 gelangt das Rücklauföl durch die Feinsteuernuten 45 und 47 zu dem Anschluß 22. Bei großer Belastung ist die Verschiebung des Ventilschiebe 30 größer, so daß das Rücklauföl aus der Ringnut 34 direkt in die Ringnut 57 fließen kann. Hierdurch ist der Druckabbau größer.

Nach Beendigung der Drehbewegung des Lenkrads 5 steigt der Druck am Anschluß 26 und über die Querbohrung 33 und die Längsbohrung 32 und das Rückschlagventil 41 in dem Steuerdruckraum 37 an, bis der Druck in den Steuerdruckräumen 37 und 38 gleich ist. Die Neutralstellungsfeder 39 bewegt den Ventilschieber 30 in die Neutralstellung zurück. Die Neutralstellungs Feder 39 stützt sich an der Scheibe 62 ab, die ihrerseits in Neutralstellung des Ventilschiebers 30 an der Abstützkante 64 anliegt. Die Neutralstellungs Feder 39 kann den Ventilschieber 30 nicht über die Neutralstellung hinausdrücken.

Der kegelstumpfförmige Ansatz 49 dient zur Führung der Neutralstellungs Feder 39 und als Anschlag für den Ventilschieber 30.

Die Druckentlastungsrille 51 bzw. 52 steht in Neutralstellung des Ventilschiebers 30 mit dem Anschluß 22 bzw. 23 in Verbindung. Ein ungewollter Druckaufbau in den Arbeitsanschlüssen 20 bzw. 21 und den Ringnuten 55 bzw. 56 kann über diese Druckentlastungsrille 51 bzw. 52 abgebaut werden, wohingegen ein Druckabbau von der Ringnut 55 bzw. 56 zur Ringnut 59 bzw. 60 vermieden wird.

Über die Sackbohrung 53 bzw. 54 steht der Steuerdruckraum 37 bzw. 38 mit dem Anschluß 24 bzw. 25 der Steuerpumpe 2 in Verbindung.

Durch Betätigung der Steuerpumpe 2 nach links bewegt sich der Ventilschieber 30 aufgrund des Druckaufbaues im Steuerdruckraum 37 nach rechts, wodurch Drucköl von dem Anschluß 26 über die Ringnut 61, die Ringnut 35 und die Querbohrung 33 zur Ringnut 60 und den Anschluß 25 strömt. Ferner fließt das Drucköl von der Querbohrung 33 in die Längsbohrung 32, durch das sich öffnende Rückschlagventil 42, den Steuerdruckraum 38, über die Sackbohrung 54 ebenfalls über den Anschluß 25 zu der Steuerpumpe 2. Das Drucköl gelangt durch die Steuerpumpe 2 hindurch zum Anschluß 24 und durch die Ringnut 59 und die Ringnut 55 in den Druckraum 27 des Zylinders 73. Das Rücklauföl gelangt durch den Arbeitsanschluß 21, die Ringnut 56 an den Feinsteuernuten 46 und 48 vorbei zum Anschluß 23. Zur näheren Erläuterung wird auf die oben beschriebene analoge Lenkung nach rechts verwiesen.

Beim Ausfall der Druckzufuhr durch die Hauptpumpe 3 erfolgt bei Betätigung der Steuerpumpe 2 nach rechts in bereits beschriebener Weise ein Druckaufbau in dem Steuerdruckraum 38. Der Ventilschieber 30 bewegt sich nach links. Die Steuerpumpe 2 saugt nun das fehlende Öl durch das Rückschlagventil 66 über die Bohrung 67 direkt aus dem Tank 4 an. Das Öl fließt aus dem Tank 4 zum Anschluß 23, durch die Ringnut 58, die Bohrung 67 und das Rückschlagventil 66 zur Ringnut 61. Anschließend gelangt das Öl, wie oben bei der Lenkung nach rechts beschrieben, zum Anschluß 24 der Steuerpumpe 2. Der Druckaufbau in dem Druckraum 28 des Zylinders 73 ist anschließend der gleiche wie es oben bei der Lenkung nach rechts beschrieben ist. Nach links erfolgt sinngemäß das gleiche Ansaugen des Öls über das Rückschlagventil 66.

Bei der Betätigung des Lenkrads 5 nach rechts bewegt sich der Kolben 29 nach links, bei Betätigung des Lenkrads 5 in Drehrichtung links bewegt sich der Kolben 29 nach rechts. Werden zwei mit dem Kolben 29 verbundene Kolbenstangen 74 und 75 über ein analoges Gestänge mit den Rädern 9, 10 verbunden, so wird die Bewegung des Kolbens 29 auf diese Räder 9, 10 übertragen. Diese Übertragung der Bewegung des Kolbens 29 wurde anhand Figur 1 erläutert, in der dargestellt ist, wie zwei Lenkzylinder 6 und 7 über das Gestänge 11 und die Achse 8 mit den beiden Rädern 9 und 10 verbunden sind. Diese erfindungsgemäße Steuervorrichtung 1 kann bei einem Fahrzeug verwendet werden, das ein Konstantdrucksystem aufweist.

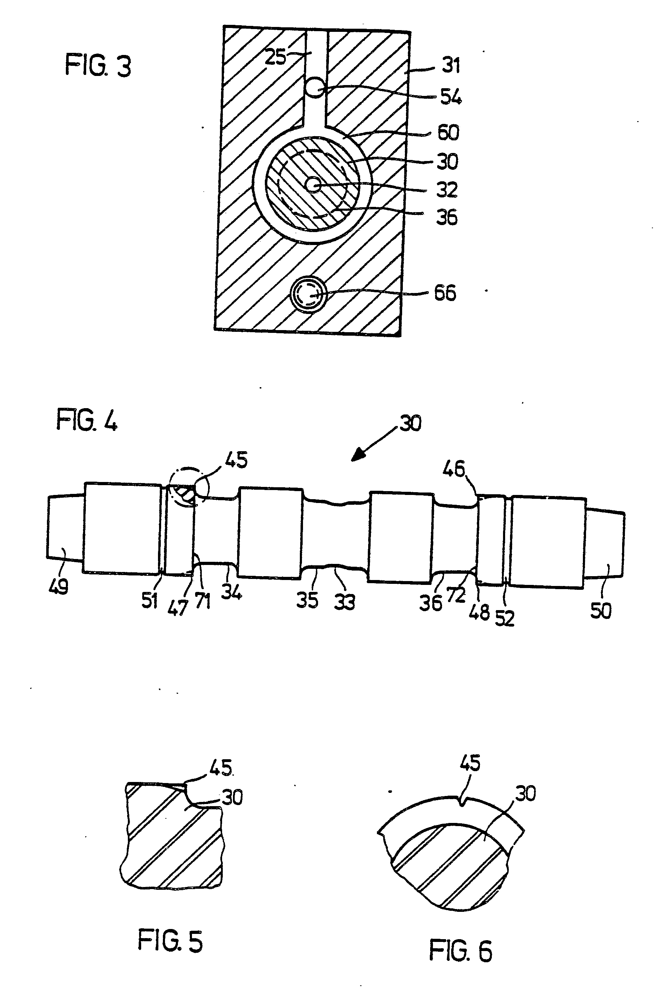

Figur 3 zeigt den Schnitt längs der Linie A—A gemäß Figur 2. Der Anschluß 25 ist mit der Ringnut 60 des Gehäuses 31 verbunden. Die Sackbohrung 54 ist ebenfalls erkennbar. Zentrisch befindet sich in der Mitte der Ringnut 60 der Ventilschieber 30, der die Längsbohrung 32 aufweist. Gestrichelt ist die Ringnut 36 erkennbar. Unter dem Ventilschieber 30 ist das Rückschlagventil 66 angeordnet.

Figur 4 zeigt eine Ansicht des Ventilschiebers 30. Der Ventilschieber 30 weist die drei Ringnuten 34, 35 und 36 auf. Außerhalb dieser Ringnuten 34 bis 36 befinden sich die beiden Druckentlastungsrillen 51 und 52. An den äußersten Enden des Ventilschiebers 30 sind die kegelstumpfförmigen Ansätze 49 und 50 angeordnet. Die Querbohrung 33 mündet in die Ringnut 35. An der äußersten Kante 71 bzw. 72 der Ringnut 34 bzw. 36 sind die Feinsteuernuten 45 und 47 bzw. 46 und 48 angeordnet. Der kreisförmige Ausschnitt gemäß Figur 4 ist in Figur 5 und Figur 6 vergrößert dargestellt. Die Feinsteuernuten 46 bis 48 sind entsprechend der Feinsteuernut 45 ausgestaltet.

Die Feinsteuernut 45 ist gemäß Figur 5 bzw. Figur 6 im Längsschnitt bzw. im Querschnitt dreieckig. Es handelt sich hierbei um eine Einkerbung in dem äußeren Umfang des Ventilschiebers 30.

Die erfindungsgemäße hydraulische Steuervorrichtung 1 ist für jegliches Konstantdrucksystem für alle üblicherweise infrage kommenden Drücke anwendbar. Ebenso ist sie unempfindlich gegen kaltes Öl. Die Steuerpumpe 2 ermöglicht eine feine Dosierung des Drucköles, so daß die gewünschte Feinsteuerung gewährleistet ist.

**Patentansprüche**

1. Steuerventilvorrichtung (1), insbesondere Lenkventil, mit einem Ventilschieber (30), einer diesen aufnehmenden Kammer, in die ein Verbraucher (6, 7), eine Konstantdruckquelle (3) und eine Steuerpumpe (2) münden, und mit endseitig an die Kammer anschließenden Steuerdruckräumen (37, 38), wobei die Steuerpumpe (2) einerseits mit einem Steuerdruckraum (37, 38) und andererseits mit einem anderen Steuerdruckraum (38, 37) verbunden ist und der Ventilschieber (30) durch Betätigen der Steuerpumpe (2) in Stellungen bringbar ist, in denen die Steuerpumpe (2) und die Steuerdruckräume (37, 38) mit der Konstantdruckquelle (3) verbunden sind und in denen ein Druckmittelstrom von der Konstantdruckquelle (3) über die Steuerpumpe (2) zu dem Verbraucher (6, 7) erfolgt, dadurch gekennzeichnet, daß die Steuerpumpe (2) und die Steuerdruckräume (37, 38) ständig mit der Konstantdruckquelle (3) verbunden sind und entgegen der Strömungsrichtung von der Konstantdruckquelle (3) zu den Steuerdruckräumen (37, 38) schließende Rückschlagventile (41, 42) in der Verbindung zwischen der Konstantdruckquelle (3) und den Steuerdruckräumen (37, 38) vorgesehen sind.

2. Steuerventilvorrichtung nach Anspruch 1, wobei in dem Ventilschieber (30) Längsbohrungen (32) vorgesehen sind, die einenends in jeweils einen Steuerdruckraum (37, 38) führen, dadurch gekennzeichnet, daß die zu beiden Steuerdruckräumen (37, 38) führenden Längsbohrungen (32) miteinander verbunden sind und über eine Querbohrung (33) ständig mit der Konstantdruckquelle (3) in Verbindung stehen.

3. Steuerventilvorrichtung nach Anspruch 1 oder 2, dadurch gekennzeichnet, daß die Rückschlagventile (41, 42) in den oder an den in die Steuerdruckräume (37, 38) eintretenden Endbereichen der Längsbohrungen (32) vorgesehen sind.

4. Steuerventilvorrichtung nach einem oder mehreren der vorherigen Ansprüche, wobei in die Kammer ein Tank (4) mündet und der Ventilschieber (30) einen Steg aufweist, der die Mündungen (20, 21 und 22, 23) des Verbrauchers und des Tanks in der Kammer trennt, wenn der Ventilschieber (30) eine Neutralstellung einnimmt, dadurch gekennzeichnet, daß auf dem Steg Feinsteuernuten (45 bis 48) angeordnet sind, über die durch Verschieben des Steuerschiebers (30) eine Verbindung zwischen dem Verbraucher (6, 7) und dem Tank (4) herstellbar ist.

5. Steuerventilvorrichtung nach Anspruch 4, wobei in dem Mündungsbereich des Tanks (4) in die Kammer eine Ringkammer (57, 58) angeordnet ist, dadurch gekennzeichnet, daß eine Druckentlastungsrille (51, 52) in den Steg eingebracht ist, die einerseits mit der Ringkammer (57, 58) in Verbindung steht und sich andererseits bis nahe in die Feinsteuernuten (45 bis 48) erstreckt.

6. Steuerventilvorrichtung nach Anspruch 4 oder 5, dadurch gekennzeichnet, daß die Feinsteuernuten (45 bis 48) im Querschnitt und im Längsschnitt dreiecksförmig sind.

7. Steuerventilvorrichtung nach einem oder mehreren der vorherigen Ansprüche, wobei sich zwischen der Konstantdruckquelle (3) und der Kammer ein Kanal erstreckt, dadurch gekennzeichnet, daß der Kanal mit dem Tank (4) in Verbindung steht und in der Verbindung ein in Richtung auf den Tank (4) zu schließendes weiteres Rückschlagventil (66) vorgesehen ist.

8. Steuerventilvorrichtung nach einem oder mehreren der vorherigen Ansprüche, wobei in den Steuerdruckräumen (37, 38) sich auf dem Ventilschieber (30) abstützende Neutralstellungsfedern (39, 40) vorgesehen sind, dadurch gekennzeichnet, daß die Kennlinie der Neutralstellungsfedern (39, 40) progressiv ist.

## Revendications

1. Dispositif à valve ou distributeur de commande (1), en particulier valve de direction, comportant un tiroir (30), une chambre principale recevant ce tiroir, dans laquelle débouchent un appareil utilisateur (6, 7) une source à pression constante (3) et une pompe de commande (2), et des chambres à pression de commande (37, 38) se raccordant aus extrémités de la chambre principale, la pompe de commande (2) étant reliée d'une part, à une chambre à pression de commande (37, 38) et, d'autre part, à une autre chambre à pression de commande (38, 37), le tiroir (30) pouvant, par l'actionnement de la pompe de commande (2), être amené dans des positions dans lesquelles la pompe de commande (2) et les chambres à pression de commande (37, 38) sont reliées à la source à pression constante (3) et dans lesquelles un écoulement de fluide sous pression a lieu depuis la source à pression constante (3) vers l'appareil utilisateur (6, 7) par l'intermédiaire de la pompe de commande (2, caractérisé en ce que la pompe de commande (2) et les chambres à pression de commande (37, 38) sont reliées de façon permanente à la source à pression constante (3) et en ce que des clapets de retenue (41, 42) se fermant à l'opposé du sens l'écoulement de la source à pression constante (3) vers les chambres à pression de commande (37, 38) sont prévus dans la communication entre la source à pression constante (3) et les chambres à pression de commande (37, 38).

2. Dispositif à valve de commande suivant la revendication 1, dans lequel des perçages longitudinaux (32) sont prévus dans le tiroir (30), ces perçages aboutissant par une extrémité chaque fois dans une chambre à pression de commande (37, 38), caractérisé en ce que les perçages longitudinaux (32) aboutissant aux deux chambres à pression de commande (37, 38) sont reliés entre eux et sont en communication de façon permanente avec la source à pression constante (3) par l'intermédiaire d'un perçage transversal (33).

3. Dispositif à valve de commande suivant la revendication 1 ou 2, caractérisé en ce que les clapets de retenue (41, 42) sont prévus dans les parties terminales des perçages longitudinaux (32) débouchant dans les chambres à pression de commande (37, 38) ou au niveau de ces parties terminales.

4. Dispositif à valve de commande suivant une ou plusieurs des revendications précédentes, dans lequel un réservoir (4) débouche dans la chambre principale et le tiroir (30) comporte un collet qui sépare les embouchures (20, 21, et 22, 23) de l'appareil utilisateur et du réservoir dans la chambre principale quand le tiroir (30) vient occuper une position neutre, caractérisé en ce qu'il est prévu, sur le collet, des rainures de commande fine (45 à 48) par lesquelles, sous l'effet d'un déplacement en translation du tiroir de commande (30), en communication peut être établie entre l'appareil utilisateur (6, 7) et le réservoir (4).

5. Dispositif à valve de commande suivant la revendication 4, dans lequel une chambre annulaire (57, 58) est ménagée dans la zone correspondant à l'embouchure du réservoir (4) dans la chambre principale, caractérisé en ce qu'une gorge de détente (51, 52) est ménagée dans le collet, cette gorge étant, d'une part, en communication avec la chambre annulaire (57, 58) et s'étendant, d'autre part, jusqu'au voisinage immédiat des rainures de commande fine (45 à 48).

6. Dispositif à valve de commande suivant la revendication 4 ou 5, caractérisé en ce que les rainures de commande fine (45 à 48) ont en coupe transversale et en coupe longitudinale une forme triangulaire.

7. Dispositif à valve de commande suivant une ou plusieurs des revendications précédentes, dans lequel un canal ou passage s'étend entre la source à pression constante (3) et la chambre principale, caractérisé en ce que le canal est en communication avec le réservoir (4) et en ce qu'il est prévu, dans la communication, un autre clapet de retenue (66) se fermant en direction du réservoir.

8. Dispositif à valve de commande suivant une ou plusieurs des revendications précédentes, dans lequel il est prévu, dans les chambres à pression de commande (37, 38), des ressorts de rappel en position neutre (39, 40) prenant appui sur le tiroir (30), caractérisé en ce que la caractéristique d'élasticité des ressorts de rappel en position neutre (39, 40) est progressive.

**Claims**

1. Control valve device (1), in particular a steering valve, having a valve slide (30), a chamber accommodating it, into which a load (6, 7), a constant-pressure source (3) and a control pump (2) discharge, and having control pressure spaces (37, 38) adjoining the chamber at its ends, the control pump (2) being connected on the one hand with one control pressure space (37, 38) and on the other hand with the other control pressure space (38, 37) and it being possible, by actuation of the control pump (2), to bring the valve slide (30) into positions in which the control pump (2) and the control pressure spaces (37, 38) are connected to the constant-pressure source (3) and in which a flow of pressure medium takes place from the constant-pressure source (3) via the control pump (2) to the load (6, 7), characterised in that the control pump (2) and the control pressure spaces (37, 38) are constantly connected to the constant-pressure source (3) and non-return valves (41, 42) closing in the opposite direction to the direction of flow from the constant-pressure source (3) to the control pressure spaces (37, 38) are provided in the connection between the constant-pressure source (3) and the control pressure spaces (37, 38).

2. Control valve device according to claim 1, wherein longitudinal bores (32) each leading at one end into a control pressure space (37, 38) are provided in the valve slide (30), characterised in that the longitudinal bores (32) leading to the two control pressure spaces (37, 38) are interconnected and are constantly in communication with the constant-pressure source (3) via a transverse bore (33).

3. Control valve device according to claim 1 or 2, characterised in that the non-return valves (41, 42) are provided in or at the terminal zones of the longitudinal bores (32) entering the control pressure spaces (37, 38).

4. Control valve device according to one or more of the preceding claims, wherein a tank (4) discharges into the chamber and the valve slide (30) has an intermediate portion which separates the mouths (20, 21 and 22, 23) of the load and the tank in the chamber when the valve slide (30) adopts a neutral position, characterised in that on the intermediate portion there are arranged precision control grooves (45 to 48) by way of which a connection can be established between the load (6, 7) and the tank (4) by shifting the control slide (30).

5. Control valve device according to claim 4, wherein an annular chamber (57, 58) is arranged in the zone where the tank (4) discharges into the chamber, characterised in that a pressure relief groove (51, 52) is formed in the intermediate portion, the pressure relief groove being in communication with the annular chamber (57, 58), on the one hand, and extending close to the precision control grooves (45 to 48), on the other hand.

6. Control valve device according to claim 4 or 5, characterised in that the precision control grooves (45 to 48) are of triangular shape in cross-section and longitudinal section.

7. Control valve device according to one or more of the preceding claims, wherein a duct extends between the constant-pressure source (3) and the chamber, characterised in that the duct is in communication with the tank (4) and another non-return valve (66) which can be closed towards the tank (4) is provided in the connection.

8. Control valve device according to one or more of the preceding claims, wherein neutral-position springs (39, 40) supported on the valve slide (30) are provided in the control pressure spaces (37, 38), characterised in that the characteristic of the neutral position springs (39, 40) is progressive.

FIG. 1

0 074 423

0 074 423

FIG. 2

3

FIG. 3

FIG. 4

FIG. 5

FIG. 6